# FASCICULE DE BREVET EUROPEEN

(11) **EP 2 635 084 B1**
(45) Date de publication et mention de la délivrance du brevet: **08.04.2015**
(21) Numéro de dépôt: 13157099.6
(22) Date de dépôt: 28.02.2013
(51) Int. Cl.: H04W 76/04, H04W 4/00, H04W 60/02, H04W 52/02

(54) **Procédé et dispositif de contrôle de l'accès d'un équipement pour réseau de type machine-à-machine aux ressources d'un réseau de téléphonie cellulaire**
Verfahren und Vorrichtung zur Steuerung des Zugriffs einer Maschine-Maschine-Terminal an Netzressourcen eines Mobilfunknetzwerks
Method and apparatus for controlling access of a machine-to-machine terminal to network resources of a cellular network

(30) Priorité: 28.02.2012 FR 1251807
(43) Date de publication de la demande: 04.09.2013
(73) Titulaire: Sierra Wireless, 92442 Issy-les-Moulineaux Cedex (FR)
(72) Inventeur: Raouf, Djelal, 92100 Boulogne Billancourt (FR); Corlay, Bruno, 92000 Nanterre (FR)
(74) Mandataire: Maillet, Alain

(56) Documents cités:
- WO-A2-2011/087233
- Bruno Corlay: "WP6 - Device Improvements - D6.2 Final specification of the energy-efficiency implementation", Exalted website , 29 février 2012 (2012-02-29), XP002684009, Extrait de l'Internet: URL:http://www.ict-exalted.eu/fileadmin/do cuments/EXALTED_WP6_D6.2.pdf [extrait le 2012-09-22]
- SAMSUNG: "Idle standby time analysis for MTC device", 3GPP DRAFT; R2-102197_IDLE STANDBY TIME ANALYSIS_R5, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Beijing, china; 20100412, 6 avril 2010 (2010-04-06), XP050422593,
- VODAFONE: "Call forwarding, paging and long periodic timers", 3GPP DRAFT; C1-113627-WAS-113359-24301-A30, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Malta; 20110822, 29 août 2011 (2011-08-29), XP050534106,

## Description

La présente invention concerne un procédé de contrôle de l'accès d'un équipement pour réseau de type machine-à-machine aux ressources d'un réseau de téléphonie cellulaire.

Il est connu des équipements pour réseau dit machine-à-machine. Ce terme de machine-à-machine (M2M en anglais) est un terme utilisé en informatique et télécommunication pour désigner les technologies permettant à deux machines d'échanger des informations. Ce type de réseau est, par exemple, déployé dans un habitat pour, par exemple, la surveillance à distance de cet habitat et/ou de son environnement. Ceci est réalisé par la collecte de données générées par des équipements de mesure, des capteurs sans fil, généralement en réseau avec une passerelle domestique.

Ces équipements pour réseau machine-à-machine, souvent appelés équipements M2M, sont munis de moyens pour communiquer sans fil avec un autre équipement pour réseau machine-à-machine.

Il a été identifié le besoin d'utiliser les réseaux de téléphonie cellulaire pour transmettre les données collectées par des équipements M2M vers un autre équipement M2M situé à longue distance, par exemple sur un autre site.

Toutefois, l'intégration de ces équipements M2M dans un réseau de téléphonie cellulaire pose plusieurs problèmes techniques.

En effet, un réseau de téléphonie cellulaire est conçu pour veiller à ce qu'un utilisateur, au travers de son appareil, soit en mesure de recevoir un appel, d'effectuer un appel, de recevoir des données ou de transmettre des données sans aucun retard quelle que soit la cellule du réseau à laquelle est rattaché son appareil. Ainsi, l'appareil n'est pas toujours connecté au réseau, mais la connectivité est toujours possible et peut survenir à tout moment.

L'accès aux services déployés sur un réseau de téléphonie cellulaire est conditionné à l'enregistrement préalable des appareils c'est-à-dire, entre autres, à l'attribution d'un contexte de connexion qui va permettre à ces appareils de communiquer leurs données via le réseau. Un contexte de connexion est appelé *PDP Context* en anglais dans les normes 2G et3G (3GGP 22.060) et *EPS Bearer* dans la norme LTE (3GPP 23.401 et 24.301). Le contexte de connexion PDP ou *EPS Bearer* contient une adresse IP (*Internet Protocol* en anglais) plus des paramètres de qualité de services comme le débit minimal.

L'enregistrement initial est habituellement effectué par une procédure dite d'attachement, puis, une fois que l'appareil est enregistré auprès du réseau, par une procédure de mise à jour qui est alors mise en oeuvre pour suivre l'évolution de cet appareil vis-à-vis du réseau de téléphonie cellulaire.

Ainsi, en permettant à un grand nombre d'équipements M2M de s'enregistrer auprès du réseau de téléphonie cellulaire pour communiquer entre eux via ce réseau de téléphonie cellulaire, le surplus de données transmises est susceptible de saturer ou de contribuer à saturer l'infrastructure réseau en cas d'accès simultané. Les équipements M2M, qui n'émettent des données que très rarement, sont également susceptibles de procéder à des mises à jour périodiques de leur enregistrement auprès du réseau de téléphonie cellulaire, ce qui provoque également, d'une part, une augmentation significative de la consommation énergétique de ces équipements et donc une réduction de leur autonomie et de la durée entre deux phases de maintenance de ces équipements et, d'autre part, une dépense accrue des ressources du réseau tant au niveau de la consommation de la bande passante que des ressources matérielles qui assurent le fonctionnement de ce réseau. Ces mises à jour ne peuvent pas être supprimées pour un équipement M2M sous peine de perte de son contexte de connexion, et donc d'être obligé de procéder, à nouveau, à un enregistrement complet de cet équipement auprès du réseau dès lors que cet équipement devra émettre à nouveau des données. Par ailleurs, la perte de l'adresse IP (du contexte de connexion) par un équipement M2M n'est pas envisageable car tout autre équipement qui connaîtrait cette adresse IP d'un équipement M2M ne pourrait alors plus joindre cet équipement.

Un nouvel enregistrement d'un équipement M2M auprès du réseau de téléphonie cellulaire est également à proscrire car il entraîne inéluctablement la négociation d'un nouveau contexte de connexion qui se révèle habituellement dommageable par sa lourdeur pour la continuité d'un service déployé sur le réseau machine-à-machine. De plus, la négociation d'un nouveau contexte de connexion requiert des échanges supplémentaires entre l'équipement M2M et l'équipement réseau ce qui entraîne des dépenses énergétiques pour l'équipement M2M.

La demande de brevet publiée sous la référence WO2011/1/087233 décrit un procédé et un appareil supportant une opération de réception discontinue dans un système de communication mobile.

Le problème résolu par la présente invention est de remédier aux inconvénients suscités.

A cet effet, la présente invention concerne un procédé de contrôle de l'accès d'un équipement pour réseau de type machine-à-machine aux ressources d'un réseau de téléphonie cellulaire, ledit équipement comportant des moyens pour communiquer sans fil avec un autre équipement pour réseau machine-à-machine. Le procédé est **caractérisé en ce qu'il** comporte les étapes suivantes :
- définir au moins une plage temporelle dite d'activité et au moins une plage temporelle dite d'inactivité,
- autoriser l'équipement à accéder aux ressources du réseau de téléphonie cellulaire pendant chaque plage temporelle d'activité, et
- interdire l'équipement à accéder aux ressources du réseau de téléphonie cellulaire pendant chaque plage temporelle d'inactivité.

Imposer à un équipement M2M des plages temporelles d'activité et d'inactivité, qui sont par ailleurs connues du réseau de téléphonie cellulaire, permet de réguler l'activité de ces équipements entre eux à chaque instant, ce qui permet d'assurer la cohabitation et la continuité des services déployés entre ces équipements sur un réseau machine-à-machine et des services classiques de téléphonie. De plus, le procédé permet de dégager des périodes pendant lesquelles l'équipement M2M n'a aucune activité et ce en fonction des données que cet équipement a besoin d'émettre ou recevoir d'un autre équipement M2M. Cette adaptation des durées des plages temporelles d'activité et d'inactivité peut donc être optimisée selon chaque équipement pour que ces équipements puissent économiser au maximum leurs ressources et donc augmenter leur durée de vie opérationnelle.

Avantageusement, l'équipement devant être enregistré auprès du réseau de téléphonie cellulaire pour accéder aux ressources de ce réseau et la mise à jour de cet enregistrement étant fonction du décompte d'au moins un compteur, le décompte de ce ou ces compteurs est suspendu pendant chaque plage temporelle d'inactivité.

L'un des avantages de suspendre le décompte de ces compteurs pendant chaque plage temporelle d'inactivité est d'augmenter artificiellement leur durée au-delà de celle qui est habituellement donnée. Ceci permet donc à ces équipements de rester plus longtemps dans un mode de fonctionnement très basse consommation et de n'en sortir que lorsqu'ils doivent émettre des données, autrement dit qu'occasionnellement.

Selon une variante, la mise à jour de cet enregistrement est fonction du décompte d'au moins un compteur côté réseau et d'un compteur côté équipement.

Selon une variante, aucun mécanisme de découverte de l'équipement dans le réseau n'est mis en oeuvre pendant chaque période d'inactivité.

Ce mécanisme de découverte d'équipement est un mécanisme à l'initiative du réseau qui demande à un équipement M2M d'allouer des ressources pour établir une connexion entre le réseau et cet équipement. Des ressources réseau (radio, serveur) sont donc économisées par la mise en oeuvre de cette variante du procédé.

Selon une variante, un message de confirmation d'attachement étant reçu par l'équipement lors de son enregistrement auprès du réseau de téléphonie cellulaire, ledit message contient des informations qui définissent au moins une plage temporelle d'activité.

Selon une variante, un message utilisé lorsque l'équipement fonctionne en mode connecté contient des informations qui définissent au moins une plage temporelle d'activité.

L'équipement M2M en déduit alors les plages temporelles d'inactivité par complément des plages temporelles d'activité.

Selon une variante, un message de demande d'attachement qui est émis par l'équipement lors de son enregistrement contient des informations qui définissent au moins une plage temporelle d'activité et au moins une plage temporelle d'inactivité.

L'équipement M2M peut ainsi proposer au réseau NET un nouveau cycle de fonctionnement (alternance entre plage temporelle d'inactivité et d'activité). Le réseau NET peut alors soit accepter ce nouveau cycle de fonctionnement, soit le refuser.

Selon l'un de ses aspects matériels, la présente invention concerne également un dispositif de contrôle de l'accès d'un équipement pour réseau de type machine-à-machine aux ressources d'un réseau de téléphonie cellulaire, ledit équipement comportant des moyens pour communiquer sans fil avec un autre équipement pour réseau machine-à-machine. Le dispositif est **caractérisé en ce qu'il** comporte des moyens pour:
- définir au moins une plage temporelle dite d'activité et au moins une plage temporelle dite d'inactivité,
- autoriser l'équipement à accéder aux ressources du réseau de téléphonie cellulaire pendant chaque plage temporelle d'activité, et
- interdire l'équipement à accéder aux ressources du réseau de téléphonie cellulaire pendant chaque plage temporelle d'inactivité.

Selon un autre de ses aspects matériels, la présente invention concerne un équipement pour réseau de type machine-à-machine comportant des moyens pour accéder aux ressources d'un réseau de téléphonie cellulaire. Un tel équipement est **caractérisé en ce qu'il** comporte également des moyens pour :
- mémoriser au moins une plage temporelle dite d'activité et au moins une plage temporelle dite d'inactivité,
- s'autoriser à accéder aux ressources du réseau de téléphonie cellulaire pendant chaque plage temporelle d'activité, et
- s'interdire à accéder aux ressources du réseau de téléphonie cellulaire pendant chaque plage temporelle d'inactivité.

Selon un mode de réalisation, l'équipement comportant des moyens pour s'enregistrer auprès du réseau de téléphonie cellulaire pour accéder aux ressources de ce réseau et au moins un compteur utilisé dont le décompte est utilisé pour la mise à jour de cet enregistrement, ledit équipement comporte, de plus, des moyens pour suspendre le décompte de ce ou ces compteurs pendant chaque plage temporelle d'inactivité.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente un exemple d'un dispositif de contrôle d'accès d'un équipement à faibles ressources à un réseau de téléphonie cellulaire.
La Fig. 2 illustre schématiquement l'architecture d'un équipement M2M mettant en oeuvre partiellement le procédé de la Fig. 1.
Les Fig. 3-6 représentent des illustrations de la mise en oeuvre d'un cycle de communication relatif au procédé de contrôle de la présente invention.

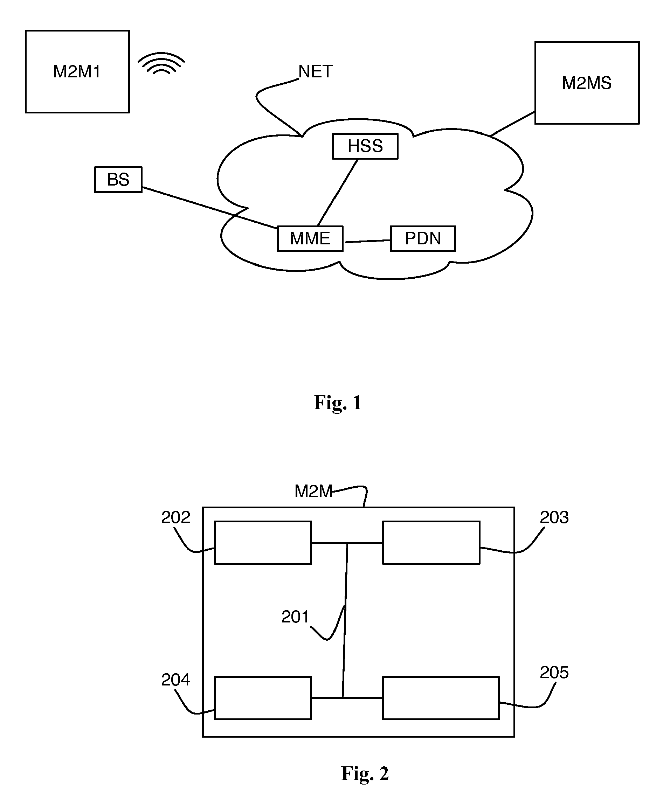

A la Fig. 1, est représenté un exemple d'un réseau de téléphonie cellulaire NET tel que, par exemple, un réseau NET de type commutation de paquets (*Packet Switch* en anglais) tel que 2G, 3G ou encore de type commutation de paquets évolué (*Evolved Packet Switch* en anglais) tel que 3G, 4G (dont LTE, *Long Term Evolution*).

Ce réseau NET comporte des équipements classiques tels que des passerelles PDN, ou encore des équipements assurant les fonctions classiques et connus sous les abréviations MME (*Mobility Management Entity* en anglais), HSS (*Home Subscriber Server* en anglais), ou encore BS (*Base Station* en anglais), etc....

Deux équipements M2M, M2M1 et M2MS sont ici considérés à titre d'exemple. L'équipement M2M1 est par exemple une centrale de gestion domotique d'un habitat et l'équipement M2MS est un serveur regroupant les données issues de cet habitat.

Selon l'un de ses aspects, la présente invention concerne un procédé de contrôle de l'accès de l'équipement M2M1 aux ressources du réseau NET et ce dans le but de communiquer avec l'équipement M2MS.

Au cours du procédé, au moins une plage temporelle dite d'activité et au moins une plage temporelle dite d'inactivité sont définies.

Chaque équipement M2M connaît alors au moins une plage temporelle d'activité et une plage temporelle d'inactivité et chacune de ces plages sont connues du réseau NET.

Ces plages temporelles d'activité et d'inactivité sont, par exemple, prédéfinies lors de la souscription à un service d'un opérateur, ou communiquées par un équipement du réseau machine-à-machine.

Chaque équipement M2M est alors autorisé à accéder aux ressources du réseau NET pendant chaque plage temporelle d'activité, et cet équipement ne peut pas (interdiction) accéder à ces ressources pendant chaque plage temporelle d'inactivité.

Ce procédé peut être implémenté sur des réseaux de téléphonie cellulaire tels que par exemple le réseau 3G ou LTE. Par la suite, nous allons décrire un mode de réalisation de ce procédé lorsqu'il est mis en oeuvre dans un réseau LTE sans pour autant limiter la portée de l'invention à ce type de réseau.

Dans un réseau LTE (3GPP TS 23.401 « GPRS enhancements for E-UTRAN access ») l'accès à des services n'est disponible qu'à des équipements enregistrés. L'enregistrement initial d'un équipement est mis en oeuvre par une procédure d'attachement tandis que cet enregistrement est maintenu par une procédure de mise à jour.

Au cours de la procédure d'attachement, un équipement M2M émet un message de demande d'attachement à destination du réseau NET, en l'occurrence un équipement MME qui va être responsable de cet équipement. Cet équipement MME crée alors un contexte de connexion propre à cet équipement puis émet à destination de cet équipement M2M le contexte créé dans un message de confirmation d'attachement. Un contexte de connexion est conservé par l'équipement MME ou encore l'équipement HSS pour chaque équipement enregistré. Par exemple, un contexte de connexion comporte une adresse IP (*Internet Protocol*) qui est attribuée par le réseau à cet équipement. Un tel contexte existe aussi longtemps que dure l'enregistrement de l'équipement. Au cas où l'équipement est radié, c'est-à-dire qu'il n'est plus enregistré, le contexte est perdu ce qui peut entraîner la perte de l'adresse IP ainsi attribuée à cet équipement. La radiation se produit, notamment, lorsque l'équipement ne parvient pas à mettre à jour périodiquement son statut d'enregistrement vis-à-vis du réseau selon la procédure de mise à jour.

Il est habituel que cette procédure de mise à jour soit périodique selon une période fixée par le réseau NET et que cette procédure utilise au moins un compteur côté réseau NHT (*network hosted timer* en anglais, *mobile reachable timer* in the LTE standard, document 3GPP TS 24.301) et un compteur côté équipement DHT (*device hosted timer* en anglais, *T3412* in the LTE standard, document 3GPP TS 24.301).

Lors de la procédure d'attachement, les deux compteurs NHT et DHT sont initialisés avec une même valeur prédéterminée. Les deux compteurs commencent à décompter dès la fin de la procédure d'attachement et ne s'arrêtent de décompter que lorsqu'un lien dédié est établi avec succès entre l'équipement M2M et un équipement du réseau NET (typiquement tant qu'aucune requête de service n'est initiée par l'équipement M2M). Les deux compteurs sont alors remis à leurs valeurs initiales et redémarrent leur décomptage suite à la perte du lien établi ou à la fin de la connexion entre l'équipement M2M et cet équipement du réseau.

Si le compteur DHT claque (atteint 0), l'équipement M2M doit lancer la procédure de mise à jour de manière à maintenir son contexte dans le réseau NET.

Si le compteur NHT claque et que la procédure de mise à jour n'a pas été lancée par l'équipement M2M, un autre décompte de compteur DNHT (*Detatch Network hosted timer* en anglais, document 3GPP TS 24.301) est lancé et ce n'est qu'à l'expiration de ce dernier compteur DNHT que le contexte de connexion est véritablement perdu pour l'équipement M2M. Si l'équipement M2M lance la procédure de mise à jour avant que le compteur DNHT ne claque voire initie avec succès une connexion dédiée avec le réseau, le contexte de connexion est maintenu.

On comprend donc, au travers de cet exemple, que le contexte de connexion est perdu à l'expiration d'un ou de plusieurs compteurs successifs.

L'implémentation du procédé selon la présente invention dans un tel réseau LTE passe par la définition de plages temporelles d'activité et d'inactivité pour chaque équipement M2M, en l'occurrence les équipements M2M1 et M2MS sur la Fig. 1.

Cette définition peut être le résultat de négociations entre fournisseurs du réseau de téléphonie cellulaire et de service pour réseau machine-à-machine de manière à réguler l'accès des équipements M2M aux ressources du réseau NET. Pendant les plages temporelles d'inactivité, chaque équipement M2M peut mettre en oeuvre un mécanisme drastique pour économiser ses ressources énergétiques, prolongeant ainsi sa durée de vie.

Implémenté dans un réseau de type LTE tel que décrit ci-dessus, l'équipement accède aux ressources du réseau de téléphonie cellulaire selon un cycle composé de plages temporelles d'activité et d'inactivité.

De plus, selon une variante, pendant chaque plage temporelle d'inactivité, aucun mécanisme de découverte de l'équipement dans le réseau (*paging* en anglais) n'est mis en oeuvre pendant chaque période d'inactivité.

Selon une variante, le message de confirmation d'attachement (*Attach accept* message en anglais) qui est reçu par un équipement M2M lors de son enregistrement initial auprès du réseau NET contient des informations qui définissent au moins une plage temporelle d'activité.

Selon une variante, un message, par exemple un message EMM (*piggybacking EMM messages* en anglais), utilisé lorsque l'équipement M2M fonctionne en mode connecté contient des informations qui définissent au moins une plage temporelle d'activité.

Selon une variante, le message de demande d'attachement (*Attach Request* en anglais) qui est émis par l'équipement M2M lors de la procédure d'attachement (lors de son enregistrement) contient des informations qui définissent au moins une plage temporelle d'activité et au moins une plage temporelle d'inactivité.

Selon une variante, les informations qui définissent les plages temporelles d'activité sont mémorisées dans un équipement, par exemple HSS, du réseau NET.

Le procédé permet d'étendre fortement la durée de décompte des compteurs qui ne décomptent leurs valeurs que pendant des plages temporelles d'activité. En choisissant ces plages temporelles d'activité espacées dans le temps, en particulier lorsque pour des équipements M2M qui n'émettent que très peu de données effectives via le réseau NET, le nombre d'échanges entre cet équipement et le réseau pour la mise à jour de leur enregistrement auprès de l'équipement MME est fortement réduit, limitant ainsi l'usage à la fois des ressources réseau et des ressources de l'équipement M2M.

Le procédé peut également être mis en oeuvre dans des réseaux de type 2G ou encore 3G.

Dans le cas d'un réseau 2G, le contexte de connexion est habituellement perdu lorsque le compteur NHT claque. Dans ce cas, l'implémentation du procédé consiste à ce que le décompte de ce compteur soit suspendu pendant chaque plage temporelle d'inactivité.

Dans le cas d'un réseau 3G récent et des réseaux LTE, deux compteurs sont utilisés : NHT et IDT (*Implicit Detach Timer* en anglais). Lorsque le compteur NHT claque, le décompte du compteur IDT commence et ce n'est que lorsque ce compteur IDT claque que le contexte de connexion est perdu. Pendant le décompte de ce compteur IDT, l'équipement ne peut communiquer avec un autre équipement mais l'équipement peut lancer une procédure de mise à jour pour « réactiver » son contexte de connexion. Dans ce cas, l'implémentation du procédé consiste à ce que le décompte du compteur NHT soit suspendu pendant chaque plage temporelle d'inactivité.

A la Fig. 2 est représentée l'architecture d'un équipement M2M mettant en oeuvre le procédé de la Fig. 1.

L'équipement M2M comporte, reliées par un bus de communication 201, des ressources matérielles très limitées en termes de capacités qui sont:
- un processeur, micro-processeur ou microcontrôleur 202 ;
- une mémoire vive RAM (*Random Access Memory* en anglais ou *Mémoire à Accès Aléatoire* en français) 203 ;
- une mémoire 204 de type ROM (*Read Only Memory* en anglais ou *Mémoire à Lecture Seule* en français) ou encore flash ou réinscriptible mais rémanente (telle que dans une clé USB) ;
- des moyens d'interface 205 avec le réseau de téléphonie cellulaire NET.

Le microcontrôleur 202 est capable d'exécuter des instructions chargées dans la RAM 203 à partir de la mémoire 204. Lorsque l'équipement M2M est mis sous tension, le microcontrôleur 202 est capable de lire de la RAM 203 des instructions et de les exécuter. Ces instructions forment un programme d'ordinateur qui cause la mise en oeuvre, par le microcontrôleur 202, de tout ou partie des procédés décrits ci-dessus en relation avec la Fig. 1.

L'équipement M2M comporte des moyens pour mémoriser au moins une plage temporelle dite d'activité et au moins une plage temporelle dite d'inactivité, par exemple la mémoire 204. Il comporte également des moyens pour s'autoriser à accéder aux ressources du réseau de téléphonie cellulaire pendant chaque plage temporelle d'activité et pour s'interdire à accéder aux ressources du réseau de téléphonie cellulaire pendant chaque plage temporelle d'inactivité. Ces moyens sont formés par le microcontrôleur 202 qui coopère avec les mémoires 204 et RAM par exemple.

Selon un mode de réalisation, l'équipement M2M comporte des moyens pour s'enregistrer auprès du réseau de téléphonie cellulaire pour accéder aux ressources de ce réseau et au moins un compteur utilisé dont le décompte est utilisé pour la mise à jour de cet enregistrement. Ces moyens peuvent être formés par les moyens 202, 203, 204 et 205 qui coopèrent alors entre eux. L'équipement M2M comporte, de plus, des moyens pour suspendre le décompte de ce ou ces compteurs pendant chaque plage temporelle d'inactivité. Ces moyens peuvent être formés par les moyens 202, 203, 204 et 205 qui coopèrent alors entre eux.

Tout ou partie des procédés décrits ci-dessus en relation avec la Fig. 1 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur, tel que le microcontrôleur 202, ou être implémenté sous forme matérielle par une machine ou un composant dédié, tel qu'un FPGA (*Field-Programmable Gate Array* en anglais ou *Matrice de Portes Programmable sur Champ* en français) ou un ASIC (*Application-Specific Integrated Circuit* en anglais ou *Circuit Intégré Spécifique à une Application* en français).

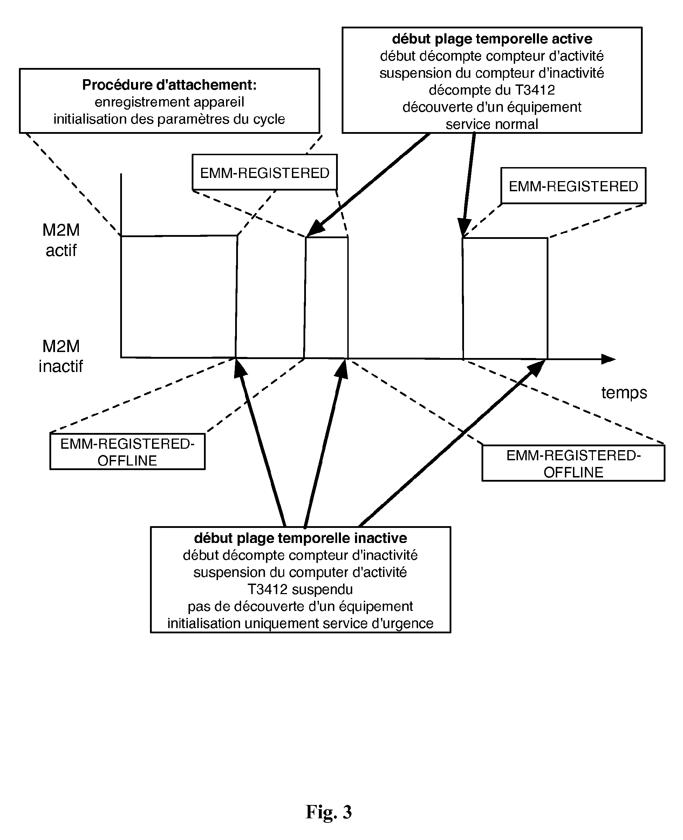

La Fig. 3 représente un exemple de diagramme temporel d'activité d'un équipement M2M observant les cycles d'activité tels que définis ici. Le diagramme débute par une phase d'acquisition des paramètres de cycles de communication lors d'une procédure d'attachement. L'équipement M2M entame ensuite une plage temporelle d'inactivité dès la fin de la procédure d'attachement pour une durée prédéterminée puis entre dans une plage temporelle d'activité, plage pendant laquelle la prochaine plage temporelle d'activité peut éventuellement être programmée soit à l'aide de message dédiés soit au travers de messages échangés en mode connecté. Les états d'un automate EMM (*EPS Mobility Management* en anglais) sont également représentés en fonction des plages temporelles d'activité de l'équipement M2M.

On rappelle que les fonctions assurées par un équipement mobile sont supervisées par un certain nombre de machines à états ou automates essentiels. L'automate EMM en est un qui prend en charge les aspects de mobilité et de sécurité de l'équipement. La connexion radio d'un équipement avec la station de base est, quant à elle, supervisée par un automate RRC (*Radio Resource Control* en anglais, contrôle des ressources radio). Lorsqu'une connexion point à point doit être établie avec la station de base, l'automate EMM commande l'établissement d'une liaison radio entre les deux équipements à l'automate RRC (procédure habituellement dite SERVICE REQUEST). Un automate RRC est par exemple décrit dans la norme 3GPP TS 36.331. L'automate RRC est en charge d'établir ce lien et, éventuellement, d'en renseigner le résultat à l'automate EMM. En cas de succès, l'automate passe de l'état RRC-IDLE (RRC veille) qui correspond à l'état RRC d'un équipement passif et à l'écoute de son environnement radio à l'état RRC-CONNECTED (RRC connecté) qui est celui d'un équipement bénéficiant d'une connexion radio dédiée à la station de base.

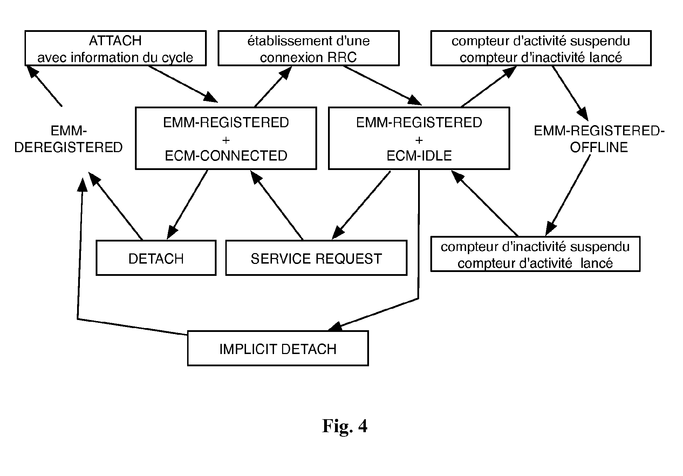

La Fig. 4 représente un diagramme d'état d'un automate EMM dans lequel est implémenté un cycle de communication défini selon le procédé de la présente invention.

Les standards EPS (§4.6 du document (3GPP TS 23.401 « GPRS enhancements for E-UTRAN access »), et §5.1.3.2 du document 3GPP TS 24.301 « NAS protocol for EPS stage 3 »), définissent un procédé à plusieurs états pour la gestion de la mobilité entre réseaux EPS. L'automate EMM identifie et maintient des connexions de communication entre des équipements mobiles qui peuvent bouger ou se connecter via plusieurs réseaux EPS.

L'automate EMM définit plusieurs états dont l'état EMM-IDLE qui est égal à l'état ECM-IDLE, l'état EMM-CONNECTED qui est égal à l'état ECM-CONNECTED, les états EMM-DEREGISTERED et EMM-REGISTERED.

Ces états d'un automate EMM décrits dans la norme 3GPP TS 24.301 et présents à la fois dans l'équipement et le réseau décrivent les statuts suivants :
- EMM-DEREGISTERED : il s'agit de l'état d'un équipement non attaché au réseau et également l'état dans lequel un équipement va démarrer.
- EMM-REGISTERED : il s'agit de l'état d'un équipement qui est parvenu à s'enregistrer auprès du réseau. Il s'agit de l'état de fonctionnement optimal d'un équipement, l'ensemble des services auxquels il peut prétendre sont accessibles.
- EMM-IDLE : il s'agit de l'état d'un équipement qui ne procède à aucune communication, typiquement un état de veille pendant lequel l'équipement est à l'écoute de son environnement radio.
- EMM-CONNECTED : il s'agit de l'état d'un équipement en communication.

A noter que les états EMM-IDLE et EMM-CONNECTED peuvent se combiner avec les états EMM-REGISTERED et EMM-DEREGISTERED, il ne s'agit pas d'états exclusifs, bien au contraire.

L'implémentation du procédé selon la présente invention dans un automate EMM consiste, selon un mode de réalisation, à ajouter un nouvel état EMM-REGISTERED.OFFLINE qui est la combinaison des états EMM-REGISTERED et ECM-IDLE.

Dans l'état EMM-REGISTERED.OFFLINE, aucun mécanisme de découverte d'un équipement n'est initié vers un équipement, les compteurs NHT (*mobile reachable timer* en anglais) et DHT sont suspendus, des compteurs d'inactivité sont lancés dans les équipements M2M et MME, des compteurs d'activité dans les équipements M2M et MME sont suspendus et des services d'urgence sont les seuls autorisés à être initiés par l'équipement M2M.

Lorsque l'automate EMM quitte l'état EMM-REGISTERED.OFFLINE, le mécanisme de découverte d'équipement redevient possible, les compteurs NHT et DHT sont relancés, les compteurs d'inactivité sont suspendus dans les équipements M2M et MME, les compteurs d'activité sont lancés dans les équipements M2M et MME et les restrictions standard aux services sont appliquées.

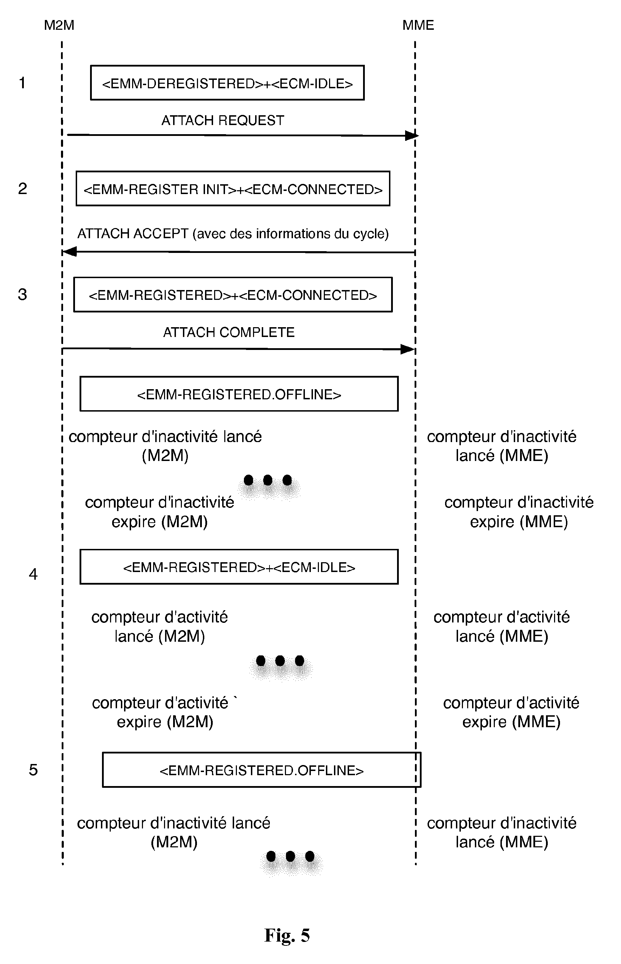

La Fig. 5 représente schématiquement un exemple de scénario pour qu'un équipement obtienne des paramètres relatifs à un cycle de communication selon la présente invention.

A l'étape 1, l'équipement M2M initie une procédure d'attachement. Quand l'automate RRC atteint l'état connecté, l'automate EMM est capable de transmettre son message ATTACH REQUEST. Le message ATTACH REQUEST peut ou peut ne pas inclure une requête de cycle de communication à partir de l'équipement M2M. L'équipement M2M atteint l'état EMM-REGISTERED-INITIATED suite à la transmission fructueuse du message ATTACH REQUEST.

A l'étape 2, l'équipement M2M reçoit le message ATTACH ACCEPT, message avec les paramètres relatifs à un nouveau cycle de communication. Ces paramètres incluent, par exemple, la durée jusqu'à la prochaine plage temporelle d'activité et la durée de cette plage temporelle. Si le message ATTACH REQUEST inclut une requête d'un cycle de communication, à partir de l'équipement M2M, les paramètres reçus acquittent ou forcent le cycle de communication. L'automate EMM atteint l'état EMM-REGISTERED suite à la réception du message ATTACH ACCEPT.

A l'étape 3, l'équipement M2M confirme à l'équipement MME par le message ATTACH COMPLETE qu'il a reçu le message, et qu'il appliquera les paramètres du cycle de communication reçu. Quand la connexion RRC prend fin, des compteurs d'inactivité sont créés à partir des paramètres du cycle de communication pour les équipements M2M et MME, et leurs décomptes sont lancés pendant que l'automate EMM atteint l'état EMM-REGISTERED.OFFLINE. Seuls les services d'urgence peuvent alors être initiés par l'équipement M2M. Conformément à la description de l'état EMM-REGISTERED.OFFLINE, les compteurs NHT et DHT sont suspendus.

A l'étape 4, quand les compteurs d'inactivité expirent, l'automate EMM atteint les états EMM-REGISTERED et ECM-IDLE et les compteurs d'activité sont lancés dans les équipements M2M et MME. Requérir un service est alors possible. Les compteurs NHT et DHT reprennent leurs décomptes.

A l'étape 5, quand les compteurs d'activité expirent, l'automate EMM bascule dans sont état EMM-REGISTERED.OFFLINE et les compteurs d'inactivité sont relancés avec la dernière valeur reçue (ici, avec le message ATTACH ACCEPT). Les compteurs NHT et DHT sont suspendus.

Le procédé se poursuit par l'étape 2, 3, 4, 5 etc.

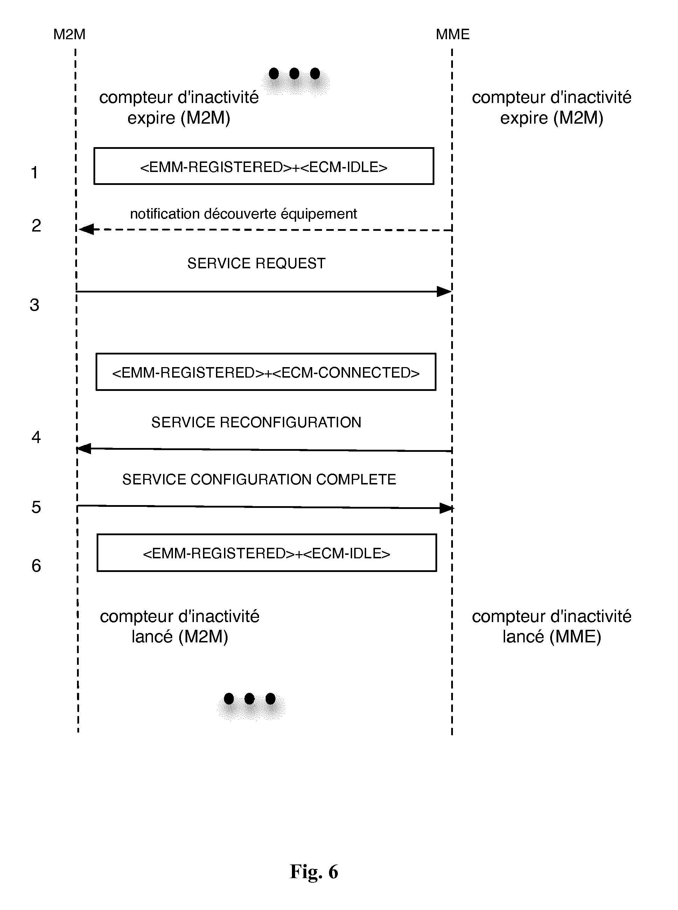

La Fig. 6 représente schématiquement un exemple de scénario pour qu'un équipement reconfigure un cycle de communication selon la présente invention.

A l'étape 1, suite à l'expiration des compteurs d'inactivité, l'automate EMM bascule dans les états EMM-REGISTERED et ECM-IDLE. Les compteurs d'activité sont lancés ainsi que les compteurs NHT et DHT. Le mécanisme de découverte d'équipement devient alors possible ainsi que l'accès normal aux services (selon une souscription préalable).

A l'étape 2, l'équipement MME a besoin d'imposer un cycle de communication particulier à l'équipement M2M. De manière à atteindre l'équipement M2M, une procédure de découverte d'équipement est initiée et l'automate EMM dans l'équipement M2M est notifié au niveau de ses couches basses (modèles OSI).

A l'étape 3, de manière à répondre à la procédure de découverte, l'automate EMM initie une procédure de requête de service et transmet un message SERVICE REQUEST quand l'automate RRC atteint l'état RRC_CONNECTED. Le message SERVICE REQUEST peut ou pas inclure des paramètres d'un cycle de communication particulier qui a été demandé par l'équipement M2M. L'automate EMM bascule dans ses états EMM-REGISTERED and ECM-CONNECTED.

A l'étape 4, les paramètres du nouveau cycle de communication sont reçus par l'équipement M2M dans le message SERVICE RECONFIGURATION REQUEST et ce message peut acquitter le cycle de communication préalablement demandé ou forcer de nouveaux cycles. L'automate EMM reste dans son état.

A l'étape 5, l'équipement M2M acquitte la transmission des paramètres du cycle de communication dans un message SERVICE RECONFIGURATION COMPLETE qu'il transmet à l'équipement MME. Pendant que l'automate RRC lance sa connexion et atteint son état RRC_IDLE, l'automate EMM bascule dans ses états EMM-REGISTERED et ECM-IDLE.

A l'étape 6, quand les compteurs d'activité expirent, les équipements M2M et MME basculent dans l'état EMM-REGISTERED.OFFLINE et lancent leurs compteurs d'inactivité avec les paramètres du nouveau cycle de communication.

Si les compteurs d'activité expirent pendant une procédure de reconfiguration de service, la procédure est maintenue jusqu'à ce qu'elle soit terminée. L'automate EMM atteint l'état EMM-REGISTERED.OFFLINE dès que le RRC perd sa connexion et passe en état RRC-IDLE.

## Revendications

1. Procédé de contrôle de l'accès d'un équipement (M2M1) pour réseau de type machine-à-machine à des ressources d'un réseau (NET) de téléphonie cellulaire, ledit équipement (M2M1) comportant des moyens pour communiquer sans fil avec un autre équipement (M2MS) pour réseau de type machine-à-machine, le procédé comportant les étapes suivantes :
- obtenir au moins une plage temporelle dite d'activité et au moins une plage temporelle dite d'inactivité,
- autoriser ledit équipement (M2M1) à accéder aux ressources du réseau (NET) de téléphonie cellulaire pendant chaque plage temporelle d'activité, et
- interdire ledit équipement (M2M1) à accéder aux ressources du réseau (NET) de téléphonie cellulaire pendant chaque plage temporelle d'inactivité,
**caractérisé en ce que**, ledit équipement (M2M1) devant être enregistré auprès du réseau (NET) de téléphonie cellulaire pour accéder aux ressources du réseau (NET) de téléphonie cellulaire et une mise à jour de l'enregistrement dudit équipement (M2M1) étant fonction d'un décompte d'au moins un compteur du côté du réseau (NET) de téléphonie cellulaire et d'un compteur du côté dudit équipement (M2M1), le décompte de ces compteurs est suspendu pendant chaque plage temporelle d'inactivité.

2. Procédé selon la revendication 1, dans lequel aucun mécanisme de découverte dudit équipement (M2M1) dans le réseau (NET) de téléphonie cellulaire n'est mis en oeuvre pendant chaque période d'inactivité.

3. Procédé selon l'une quelconque des revendications précédentes, dans lequel, un message de confirmation d'attachement étant reçu par ledit équipement (M2M1) lors de l'enregistrement dudit équipement (M2M1) auprès du réseau (NET) de téléphonie cellulaire, ledit message contient des informations qui définissent au moins une plage temporelle d'activité.

4. Procédé selon l'une quelconque des revendications précédentes, dans lequel un message utilisé lorsque l'équipement (M2M1) fonctionne dans un mode connecté contient des informations qui définissent au moins une plage temporelle d'activité.

5. Procédé selon l'une quelconque des revendications précédentes, dans lequel un message de demande d'attachement qui est émis par ledit équipement (M2M1) lors de l'enregistrement dudit équipement (M2M1) contient des informations qui définissent au moins une plage temporelle d'activité et au moins une plage temporelle d'inactivité.

6. Dispositif de contrôle de l'accès d'un équipement (M2M1) pour réseau de type machine-à-machine à des ressources d'un réseau (NET) de téléphonie cellulaire, ledit équipement (M2M1) comportant des moyens pour communiquer sans fil avec un autre équipement (M2MS) pour réseau machine-à-machine, le dispositif comportant:
- des moyens pour obtenir au moins une plage temporelle dite d'activité et au moins une plage temporelle dite d'inactivité,
- des moyens pour autoriser l'équipement (M2M1) à accéder aux ressources du réseau (NET) de téléphonie cellulaire pendant chaque plage temporelle d'activité, et
- des moyens pour interdire l'équipement (M2M1) à accéder aux ressources du réseau (NET) de téléphonie cellulaire pendant chaque plage temporelle d'inactivité
**caractérisé en ce que**, l'équipement (M2M1) devant être enregistré auprès du réseau (NET) de téléphonie cellulaire pour accéder aux ressources de ce réseau (NET) et une mise à jour de l'enregistrement dudit équipement (M2M1) étant fonction d'un décompte d'au moins un compteur du côté du réseau (NET) de téléphonie cellulaire et d'un compteur du côté dudit équipement (M2M1), ledit dispositif est adapté pour suspendre le décompte de ces compteurs pendant chaque plage temporelle d'inactivité.

## Patentansprüche

1. Verfahren zur Kontrolle des Zugangs einer Einrichtung (M2M1) für ein Netz vom Typ Machine-to-Machine zu Ressourcen eines Mobiltelefonnetzes (NET), wobei die Einrichtung (M2M1) Mittel zum drahtlosen Kommunizieren mit einer anderen Einrichtung (M2MS) für ein Netz vom Typ Machine-to-Machine aufweist, wobei das Verfahren die folgenden Schritte aufweist:
- Erlangen mindestens eines sogenannten Aktivitäts-Zeitbereichs und mindestens eines sogenannten Inaktivitäts-Zeitbereichs,
- Genehmigen, dass die Einrichtung (M2M1) auf die Ressourcen des Mobiltelefonnetzes (NET) zugreift, während jedes Aktivitäts-Zeitbereichs, und
- Verbieten, dass die Einrichtung (M2M1) auf die Ressourcen des Mobiltelefonnetzes (NET) zugreift, während jedes Inaktivitäts-Zeitbereichs,
**dadurch gekennzeichnet, dass**, wenn die Einrichtung (M2M1) bei dem Mobiltelefonnetz (NET) angemeldet werden muss, um auf die Ressourcen des Mobiltelefonnetzes (NET) zuzugreifen, und eine Aktualisierung der Anmeldung der Einrichtung (M2M1) in Abhängigkeit von einem Rückwärtszählen mindestens eines Zählers auf der Seite des Mobiltelefonnetzes (NET) und eines Zählers auf der Seite der Einrichtung (M2M1) erfolgt, das Rückwärtszählen dieser Zähler während jedes Inaktivitäts-Zeitbereichs unterbrochen wird.

2. Verfahren nach Anspruch 1, wobei während jeder Inaktivitätsperiode kein Mechanismus zur Erkennung der Einrichtung (M2M1) in dem Mobiltelefonnetz (NET) eingesetzt wird.

3. Verfahren nach einem der vorhergehenden Ansprüche, wobei, wenn bei der Anmeldung der Einrichtung (M2M1) bei dem Mobiltelefonnetz (NET) durch die Einrichtung (M2M1) eine Verbindungsbestätigungsnachricht empfangen wird, die Nachricht Informationen enthält, welche mindestens einen Aktivitäts-Zeitbereich definieren.

4. Verfahren nach einem der vorhergehenden Ansprüche, wobei eine Nachricht, die verwendet wird, wenn die Einrichtung (M2M1) in einer verbundenen Betriebsart arbeitet, Informationen enthält, welche mindestens einen Aktivitäts-Zeitbereich definieren.

5. Verfahren nach einem der vorhergehenden Ansprüche, wobei eine Verbindungsanforderungsnachricht, welche bei der Anmeldung der Einrichtung (M2M1) von der Einrichtung (M2M1) gesendet wird, Informationen enthält, welche mindestens einen Aktivitäts-Zeitbereich und mindestens einen Inaktivitäts-Zeitbereich definieren.

6. Vorrichtung zur Kontrolle des Zugangs einer Einrichtung (M2M1) für ein Netz vom Typ Machine-to-Machine zu Ressourcen eines Mobiltelefonnetzes (NET), wobei die Einrichtung (M2M1) Mittel zum drahtlosen Kommunizieren mit einer anderen Einrichtung (M2MS) für ein Netz vom Typ Machine-to-Machine aufweist, wobei die Vorrichtung folgendes aufweist:
- Mittel zum Erlangen mindestens eines sogenannten Aktivitäts-Zeitbereichs und mindestens eines sogenannten Inaktivitäts-Zeitbereichs,
- Mittel zum Genehmigen, dass die Einrichtung (M2M1) auf die Ressourcen des Mobiltelefonnetzes (NET) zugreift, während jedes Aktivitäts-Zeitbereichs, und
- Mittel, zum Verbieten, dass die Einrichtung (M2M1) auf die Ressourcen des Mobiltelefonnetzes (NET) zugreift, während jedes Inaktivitäts-Zeitbereichs,
**dadurch gekennzeichnet, dass**, wenn die Einrichtung (M2M1) bei dem Mobiltelefonnetz (NET) angemeldet werden muss, um auf die Ressourcen dieses Netzes (NET) zuzugreifen, und eine Aktualisierung der Anmeldung der Einrichtung (M2M1) in Abhängigkeit von einem Rückwärtszählen mindestens eines Zählers auf der Seite des Mobiltelefonnetzes (NET) und eines Zählers auf der Seite der Einrichtung (M2M1) erfolgt, die Vorrichtung dafür eingerichtet ist, das Rückwärtszählen dieser Zähler während jedes Inaktivitäts-Zeitbereichs zu unterbrechen.

## Claims

1. Method for controlling access of a terminal (M2M1) of the machine-to-machine type to network resources (NET) of a cellular telephone network, said terminal (M2M1) comprising means for wireless communication with another network terminal (M2MS) of the machine-to-machine type, the method comprising the following stages:
- Obtaining at least one time period referred to a activity and at least one time period referred to as inactivity,
- authorising the said terminal (M2M1) to access to the network resources (NET) of cellular telephony during each time period of activity, and
- prohibiting the said terminal (M2M1) from accessing to the network resources (NET) of cellular telephony during each time period of inactivity,
**characterized in that**, the said terminal (M2M1) being required to be registered with the cellular telephone network (NET) for accessing to the cellular telephone network resources (NET), and the updating of the registration of the said terminal (M2M1) being a function of a count of at least one counter on the side of the cellular telephone network (NET) and of a counter on the side of the said terminal (M2M1), the count of these counters is suspended during each time period of inactivity.

2. Method according to claim 1, wherein no discovery mechanism of the said terminal (M2M1) is implemented in the cellular telephone network (NET) during each period of inactivity.

3. Method according to any of the preceding claims, wherein, with a message of confirmation of connection being received by the said terminal (M2M1) at the registering of the said terminal (M2M1) with the cellular telephone network (NET), the said message contains items of information which define at least one time period of activity.

4. Method according to any of the preceding claims, wherein a message used when the terminal (M2M1) is functioning in a connected mode contains items of information which define at least one time period of activity.

5. Method according to any of the preceding claims, wherein a message for requesting connection which is issued by the terminal (M2M1) at the time of the registering of the said terminal (M2M1) contains items of information which define at least one time period of activity and at least one time period of inactivity.

6. Device for for controlling access of a terminal (M2M1) of the machine-to-machine type to network resources (NET) of a cellular telephone network, said terminal (M2M1) comprising means for wireless communication with another network terminal (M2MS) of the machine-to-machine type, the device comprising:
- Means for obtaining at least one time period referred to as of activity and at least one time period referred to as inactivity.
- means for authorising the terminal (M2M1) to access to the cellular telephone network resources (NET) during each time period of activity, and
- means for prohibiting the terminal (M2M1) from accessing to the cellular telephone network resources (NET) during each time period of inactivity,
**characterized in that**, the terminal (M2M1) the said terminal (M2M1) being required to be registered with the cellular telephone network (NET) for accessing to the cellular telephone network resources (NET), and the updating of the registration of the said terminal (M2M1) being a function of a count of at least one counter on the side of the cellular telephone network (NET) and of a counter on the side of the said terminal (M2M1), the count of these counters is suspended during each time period of inactivity.
